# EUROPÄISCHE PATENTANMELDUNG

(11) **EP 1 561 735 A1**
(43) Veröffentlichungstag der Anmeldung: **10.08.2005**
(21) Anmeldenummer: 04002075.2
(22) Anmeldetag: 30.01.2004
(51) Int. Cl.: C04B 24/12, B02C 23/06

(54) **Hilfsstoffe für die Zementherstellung**

(71) Anmelder: Cognis IP Management GmbH, 40589 Düsseldorf (DE)
(72) Erfinder: Llosas Bigorra, Joaquin, Dr., 08201 Sabadell (ES); Valls, Ramon, 08022 Barcelona (ES); Puche Artal, Julio, 08015 Barcelona (ES)

(57) **Zusammenfassung**

Vorgeschlagen werden Hilfsmittel für die Zementherstellung, enthaltend quaternierte Alkanolamine der Formel **(I)**, 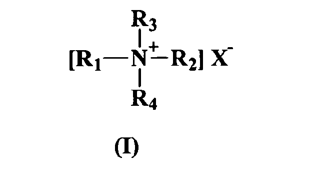 in der R¹ für einen linearen oder verzweigten Hydroxyalkylrest mit 2 bis 6 Kohlenstoffatomen, R² und R³ für einen linearen oder verzweigten, gegebenenfalls hydroxysubstituierten Alkylrest mit 1 bis 6 Kohlenstoffatomen, R⁴ für einen Alkylrest mit 1 bis 6 Kohlenstoffatomen und X für Halogenid oder Alkylsulfat steht.

## Beschreibung

### Gebiet der Erfindung

Die Erfindung befindet der Zementherstellung und betrifft derartige Zubereitungen, die neue Viskositätsregulatoren vom Typ der quaternierten Alkanolamine enthalten sowie die Verwendung dieser Stoffe zur Herstellung von Zementzubereitungen.

### Stand der Technik

Unter der Bezeichnung Zement versteht der Fachmann feingemahlene hydraulische Bindemittel, also solche mineralischen Stoffe, die unter Wasseraufnahme an der Luft und selbst unter Wasser steinartig erhärten und nach dem Erhärten wasserbeständig sind. Chemisch betrachtet handelt es sich in erster Linie um Calciumsilicate, -aluminate und -ferrite, d.h. Mischung von CaO, SiO₂, Al₂O₃ und Fe₂O₃ in unterschiedlichen Mengenverhältnissen, die beim Brennen der Rohstoffe (vorzugsweise Kalkstein, Ton, Kalkmergel und Tonmergel) bei Temperaturen bis 1500 °C entstehen. Bei Zusatz von Wasser zu diesen sogenannten "Klinkerphasen", dem "Anmachen" des Zements erfolgt das Erstarren und Erhärten des Zementleims bzw. der Zementphase durch exotherme Hydratation der Inhaltsstoffe, wobei rund 25 Gew.-% Wasser chemisch und weitere ca. 10 Gew.-% adsorptiv gebunden werden. In diesem Zusammenhang soll unter dem Begriff Zement auch Beton verstanden werden, der sich aus Zement und Betonzuschlagmitteln zusammensetzt. Beim Anmachen durchläuft der Zement verschiedene Phasen zunehmender Viskosität, wobei in der letzten Phase, dem sogenannten "grinding" ein besonders hoher Energieeintrag durch die Mühle oder das Rührwerk erforderlich ist, um das Produkt zu vermischen und umzuwälzen.

Aus dem Stand der Technik sind verschiedene Stoffgruppen bekannt, die als Additive zur Herstellung von Zement Verwendung finden. Zu nennen sind dabei insbesondere Amine sowie Aminsalze niederer Carbonsäuren, Alkanolamine (speziell Ethanolamin und Triethanolamin) sowie Polyglycole (z.B. **US 5,429,675** und **WO 96/006056 A1** (Grace) oder **US 6,005,057** (MBT). Alle diese Produkte sind jedoch mit dem Mangel behaftet, dass sie letztendlich den Viskositätsanstieg während der "grinding"-Phase entweder gar nicht oder nicht ausreichend reduzieren können.

Die Aufgabe der vorliegenden Erfindung hat somit darin bestanden, verbesserte Hilfsmittel, speziell Viskositäts- und Rheologieadditive für die Herstellung von Zement zur Verfügung zu stellen, die sich gegenüber den Produkten des Stands der Technik dadurch auszeichnen, dass sie gerade in der letzten, hochviskosen Phase der Zementherstellung die Verarbeitbarkeit der Mischungen erleichtern und dabei insbesondere den für das Rühren erforderlichen Energieeintrag reduzieren und den Durchsatz der Mühle oder des Mischers erhöhen.

### Beschreibung der Erfindung

Gegenstand der Erfindung sind Hilfsmittel für die Zementherstellung, enthaltend quaternierte Alkanolamine der Formel **(I),** 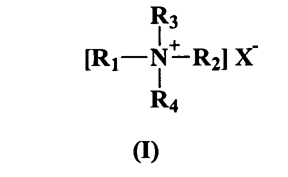 in der R¹ für einen linearen oder verzweigten Hydroxyalkylrest mit 2 bis 6 Kohlenstoffatomen, R² und R³ für einen linearen oder verzweigten, gegebenenfalls hydroxysubstituierten Alkylrest mit 1 bis 6 Kohlenstoffatomen, R⁴ für einen Alkylrest mit 1 bis 6 Kohlenstoffatomen und X für Halogenid oder Alkylsulfat steht.

Überraschenderweise wurde gefunden, dass die quaternierte Alkanolamine, gegebenenfalls in Abmischung mit nicht-quaternierten Alkanolaminen und/oder (Poly-)Alkylenglycolen eine viskositätsmodifizierende Wirkung besitzen, wodurch der Energieeintrag und die Rührleistung gerade in der hochviskosen letzten Phase der Zementherstellung signifikant vermindert und der Durchsatz beträchtlich gesteigert werden kann. Die neuen Viskositätsregulatoren erweisen sich dabei den Produkten des Stands der Technik bei weitem überlegen.

### Quaternierte Alkanolamine

Als Ausgangsstoffe für die erfindungsgemäßen kationischen Verbindungen kommen Mono-, Di- oder Trialkanolamine in Betracht, wie beispielsweise Ethanolamin, Propanolamin, Butanolamin, Diethanolamin, Dipropanolamin, Dibutanolamin, Triethanolamin, Tripropanolamin oder Tributanolamin. Es können auch gemischte Alkanolamine eingesetzt werden, wie z.B. Methyldiethanolamin.

Aus anwendungstechnischen Gründen enthalten die erfindungsgemäßen Mittel quaternierte Alkanolamine der Formel **(I),**
- in der R¹ und R² unabhängig voneinander für Hydroxyethylreste und R³ für einen Methyl- oder Hydroxyethylrest, und/oder
- in der R⁴ für einen Methylrest und/oder
- in der X für Chlorid oder Methosulfat steht.

In einer besonders bevorzugten Ausführungsform der Erfindung enthalten sie methylquaterniertes Methyldiethanolamin oder methylquaterniertes Triethanolamin. Die Einsatzmenge der quaternierten Alkanolamine kann bezogen auf die Zementzubereitungen 1 bis 10, vorzugsweise 2 bis 8 und insbesondere 3 bis 5 Gew.-% betragen.

In einer weiteren bevorzugten Ausführungsform der vorliegenden Erfindung können die Mittel Mischungen von quaterniertern und nicht-quaternierten Alkanolamine enthalten. Typische Beispiele wären Gemische von quaterniertem und nicht-quaterniertem Methyldiethanolamin oder quaterniertem und nicht-quaterniertem Triethanolamin. Obschon die Alkanolamingrundkörper durchaus verschieden sein können, hat sich der Einsatz von solchen Gemischen bewährt, wo die Grundkörper übereinstimmen. Solche Zubereitungen werden dann vorzugsweise auch nicht durch Ausmischen hergestellt, sondern durch gezielte Einstellung des Quaternierungsgrades bei der Herstellung, d.h. man setzt dem Alkanolamin nur die Menge an Alkylierungsmittel zu, die stöchiometrisch gesehen benötigt wird, um die gewünschte Mischung aus quaterniertem und nicht-quaterniertem Produkt zu erreichen. Dabei kann das molare Verhältnis von quaternierten und nicht-quaternierten Alkanolaminen 10 : 90 bis 90 : 10, vorzugsweise 80 : 20 bis 40 : 60 und insbesondere 75 : 25 bis 50 : 50 betragen. enthalten.

Die Herstellung der quaternierten (oder gegebenenfalls teil-quaternierten) Alkanolamine kann nach den einschlägigen Verfahren der präparativen organischen Chemie erfolgen. Dazu wird in der Regel das Alkanolamin vorgelegt und portionsweise unter starkem Rühren mit dem Alkylierungsmittel - vorzugsweise Dimethylsulfat oder Methylchlorid - versetzt, wobei die Temperatur mit Hilfe der Zutropfgeschwindigkeit oder durch Eiskühlung zwischen 50 und 70 °C gehalten wird. Um das Endprodukt frei von nicht-umgesetztem Alkylierungsmittel zu halten, empfiehlt es sich, dieses stets in unterstöchiometrischem Verhältnis, d.h. maximal im Verhältnis 1 : 0,97 einzusetzen und den Ansatz nach der Zugabe noch einige Stunden weiter zu rühren.

### Weitere Hilfs- und Zusatzstoffe

In eine weiteren bevorzugten Ausführungsform der Erfindung können Mittel zusätzliche Hilfs- und Zusatzstoffe enthalten, die entweder ebenfalls die Rheologie beeinflussen, oder als Emulgatoren oder Abbindeverzögerer wirken. Typische Beispiele sind insbesondere Alkylenglycole und/oder Polyalkylenglycole, wie beispielsweise Ethylenglycol, Diethylenglycol, Propylenglkycol, Dipropylenglycol oder Polyalkylenglycole mit durchschnittlichen Molekulargewichten im Bereich von 100 bis 5.000 Dalton. Die Zusatzmenge kann bezogen auf die quaternierten Alkanolamine 5 bis 50, vorzugsweise 10 bis 25 Gew.-% und bezogen auf die Zementzubereitungen 1 bis 5, vorzugsweise 2 bis 3 Gew.-% betragen.

### Gewerbliche Anwendbarkeit

Die quaternierten Alkanolamine zeichnen sich dadurch aus, dass sie insbesondere in der hochviskosen letzten Phase der Zementherstellung die Rheologie der Mischungen positiv beeinflusst, die Viskosität und die Fließgrenze herabsetzt und auf diese Weise den Energieeintrag durch das Rührwerk erniedrigen, den Durchsatz erheblich steigern und sich dabei Vergleichsprodukten des Stands der Technik als überlegen erweisen. Ein weiterer Gegenstand der vorliegenden Erfindung betrifft daher die Verwendung von quaternierten Alkanolaminen zur Herstellung von Zementzubereitungen, wobei diese gegebenenfalls als weitere Komponenten nicht-quaternierte Alkanolamine und/oder (Poly-)alkylenglycole enthalten können.

### Beispiele

### Beispiel 1

In einem 2-1-Dreihalskolben mit Tropftrichter, Rückflusskühler und Intensivrührer wurden 550 g (3,69 Mol) Triethanolamin vorgelegt und auf 40 °C erwärmt. Unter intensivem Rührer wurden dann innerhalb von 30 min 441 g (3,5 Mol) Dimethylsulfat mit einer solchen Geschwindigkeit zugetropft, dass die Temperatur einen Wert von 70 °C nicht überstieg. Anschließend wurde die Mischung bei 65 °C 4h nachgerührt. Das resultierende methylquaternierte Triethanolamin-Methosulfat wurde in praktisch quantitativer Ausbeute als transparente, leicht gelblich gefärbte Flüssigkeit erhalten.

### Beispiel 2

Beispiel 1 wurde wiederholt, die Quaternierung jedoch nur mit 378 g (3,0 Mol) Dimethylsulfat durchgeführt. Es wurde ein Gemisch von quaterniertem und nicht-quaterniertem Triethanolamin im molaren Verhältnis 80 : 20 erhalten.

### Beispiel 3

Beispiel 1 wurde wiederholt, die Quaternierung jedoch nur mit 315 g (2,5 Mol) Dimethylsulfat durchgeführt. Es wurde ein Gemisch von quaterniertem und nicht-quatemiertem Triethanolamin im molaren Verhältnis 65 : 35 erhalten.

### Beispiel 4

Beispiel 1 wurde wiederholt, die Quaternierung jedoch nur mit 220 g (1,75 Mol) Dimethylsulfat durchgeführt. Es wurde ein Gemisch von quaterniertem und nicht-quaterniertem Triethanolamin im molaren Verhältnis 45 : 55 erhalten.

### Beispiel 5

Beispiel 1 wurde wiederholt und 100 g des methyl-quaternierten Triethanolamin-Methosulfats in 100g Diethylenglycol gelöst.

### Beispiel 6

In einem 2-1-Dreihalskolben mit Tropftrichter, Rückflusskühler und Intensivrührer wurden 439 g (3,69 Mol) Methyldiethanolamin vorgelegt und auf 40 °C erwärmt. Unter intensivem Rührer wurden dann innerhalb von 30 min 441 g (3,5 Mol) Dimethylsulfat mit einer solchen Geschwindigkeit zugetropft, dass die Temperatur einen Wert von 70 °C nicht überstieg. Anschließend wurde die Mischung bei 65 °C 4h nachgerührt. Das resultierende methylquaternierte Methyldiethanolamin-Methosulfat wurde in einer Ausbeute von etwa 95 als transparente, leicht gelblich gefärbte Flüssigkeit erhalten.

## Patentansprüche

1. Hilfsmittel für die Zementherstellung, enthaltend quaternierte Alkanolamine der Formel **(I)**, 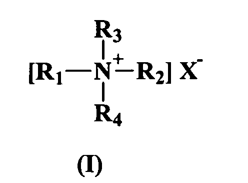 in der R¹ für einen linearen oder verzweigten Hydroxyalkylrest mit 2 bis 6 Kohlenstoffatomen, R² und R³ für einen linearen oder verzweigten, gegebenenfalls hydroxysubstituierten Alkylrest mit 1 bis 6 Kohlenstoffatomen, R⁴ für einen Alkylrest mit 1 bis 6 Kohlenstoffatomen und X für Halogenid oder Alkylsulfat steht.

2. Mittel nach Anspruch 1, **dadurch gekennzeichnet, dass** sie quaternierte Alkanolamine der Formel **(I)** enthalten, in der R¹ und R² unabhängig voneinander für Hydroxyethylreste und R³ für einen Methyl- oder Hydroxyethylrest steht.

3. Mittel nach den Ansprüchen 1 und/oder 2, **dadurch gekennzeichnet, dass** sie quaternierte Alkanolamine der Formel **(I)** enthalten, in der R⁴ für einen Methylrest steht.

4. Mittel nach mindestens einem der Ansprüche 1 bis 3, **dadurch gekennzeichnet, dass** sie quaternierte Alkanolamine der Formel **(I)** enthalten, in der X für Chlorid oder Methosulfat steht.

5. Mittel nach mindestens einem der Ansprüche 1 bis 4, **dadurch gekennzeichnet, dass** sie methylquaterniertes Methyldiethanolamin oder methylquaterniertes Triethanolamin enthalten.

6. Mittel nach mindestens einem der Ansprüche 1 bis 5, **dadurch gekennzeichnet, dass** sie Mischungen von quaterniertern und nicht-quaternierten Alkanolamine enthalten.

7. Mittel nach Anspruch 6, **dadurch gekennzeichnet, dass** sie quaternierte und nicht-quaternierte Alkanolamine im molaren Verhältnis 10 : 90 bis 90 : 10 enthalten.

8. Mittel nach mindestens einem der Ansprüche 1 bis 7, **dadurch gekennzeichnet, dass** sie zusätzlich Alkylenglycole und/oder Polyalkylenglycole enthalten.

9. Mittel nach Anspruch 8, **dadurch gekennzeichnet, dass** sie Ethylenglycol, Diethylenglkycol, Propylenglycol, Dipropylenglycol oder Polyalkylenglycole mit durchschnittlichen Molekulargewichten im Bereich von 100 bis 5.000 Dalton enthalten.

10. Verwendung von quaternierten Alkanolaminen nach Anspruch 1 zur Herstellung von Zementzubereitungen.
